# DEMANDE DE BREVET EUROPEEN

(11) **EP 1 737 186 A1**
(43) Date de publication de la demande: **27.12.2006**
(21) Numéro de dépôt: 06115170.0
(22) Date de dépôt: 08.06.2006
(51) Int. Cl.: H04L 29/06, H04L 12/66, H04Q 7/28, H04L 29/14, G10L 15/26, G06F 17/30

(54) **Passerelle entre un réseau de type push-to-talk et un deuxième réseau de télécommunication de type Internet**

(30) Priorité: 22.06.2005 FR 0506319
(71) Demandeur: FRANCE TELECOM, 75015 Paris (FR)
(72) Inventeur: Calviac, Julien, 75013, Paris (FR); Bellordre, Philippe, 75015, Paris (FR)
(74) Mandataire: Delumeau, François Guy

(57) **Abrégé**

Cette passerelle comprend des moyens (20) pour créer une première instance d'un premier client push-to-talk (CL1) adapté à communiquer avec un deuxième client push-to-talk (CL2), via un premier réseau de télécommunication (R1); des moyens pour créer une instance d'un client IP (CL1_IP) pour établir une communication avec un fournisseur de service (FS1,FS2) sur un deuxième réseau de télécommunication (R2) de type Internet; et des moyens de contrôle (10) adaptés à établir un premier canal de communication entre la première instance du premier client push-to-talk (CL1) et les moyens (CL1_IP) de communication pour établir et maintenir une session logique entre un deuxième client push-to-talk (CL2) et le fournisseur de service (FS1, FS2).

## Description

### Arrière-plan de l'invention

La présente invention se situe dans le domaine des services de type push-to-talk (PTT), ces services pouvant être déployés sur des réseaux de télécommunication fixes ou mobiles.

De façon connue, les services push-to-talk sont des services qui permettent d'échanger des messages au sein d'un groupe d'utilisateurs partageant un même canal de communication.

En pratique, chaque membre de ce groupe possède un équipement de télécommunication adapté à recevoir et émettre des signaux sur le canal partagé.

Cet équipement est conçu pour être, par défaut, dans un état de réception. Lorsque l'utilisateur désire émettre sur le canal, l'utilisateur active un bouton qui fait basculer son terminal en mode transmission à la manière d'un talkie-walkie. Il peut alors émettre des données (voix, vidéo ou tout autre média accepté par le service) sur le canal partagé, ces données étant communiquées aux autres membres du groupe.

Ce canal de communication partagé constitue ainsi un canal de communication de type half-duplex.

Historiquement, les opérateurs ont développé des services push-to-talk propriétaires.

Récemment, un travail de standardisation a été conduit par l'OMA (Open Mobile Alliance) sous le nom de "OMA-PoC V1" (PTT Over Cellular) pour normaliser les services de type push-to-talk sur des réseaux mobiles, comme par exemple le GSM (Global System for Mobile Communications), l'UMTS (Universal Mobile Telecommunications System) et l'IMS (IP Multimédia System).

Le système PoC permet ainsi le partage d'un canal de communication virtuel par un groupe d'utilisateurs sur un réseau d'accès mobile (GSM, UMTS) normalement développé pour permettre des communications de personne à personne via des canaux de communication virtuels dédiés.

Mais les services de type push-to-talk actuellement connus ou en cours de standardisation sont des services de communication instantanés interpersonnels.

En particulier, ces services ne permettent pas de mettre en relation un utilisateur de type push-to-talk avec un fournisseur de service.

Et a fortiori, ils ne permettent pas à un fournisseur de service de pousser de l'information vers l'utilisateur d'un service push-to-talk.

### Objet et résumé de l'invention

La présente invention a donc pour but principal de pallier les inconvénients précités.

A cet effet, elle vise un dispositif passerelle comportant :
- des moyens pour créer une première instance d'un premier client push-to-talk adapté à établir une session push-to-talk avec au moins un deuxième client push-to-talk, via un premier réseau de télécommunication ;
- des moyens pour établir une communication avec un fournisseur de service sur un deuxième réseau de télécommunication ; et
- des moyens de contrôle adaptés à établir un premier canal de communication entre la première instance du premier client push-to-talk et les moyens de communication pour établir une session logique entre le au moins un deuxième client push-to-talk et le fournisseur de service.

Le dispositif passerelle selon l'invention permet ainsi d'établir une communication entre un client push-to-talk et un fournisseur de service.

Cette communication peut être initiée soit par l'utilisateur push-to-talk, soit par le fournisseur de service.

Préférentiellement, les moyens de contrôle du dispositif passerelle selon l'invention sont adaptés à :
- détecter la rupture de la session push-to-talk précitée ;
- initier la création d'au moins une deuxième instance du premier client push-to-talk ;
- établir une deuxième session push-to-talk entre la deuxième instance du premier client push-to-talk et le deuxième client push-to-talk ; et
- établir un deuxième canal de communication entre la deuxième instance du premier client push-to-talk et les moyens de communication pour maintenir la session logique entre le deuxième client push-to-talk et le fournisseur de service.

Cette caractéristique permet très avantageusement de maintenir une session logique entre le deuxième client push-to-talk et le fournisseur de service, cette session permettant au fournisseur de service de rendre l'intégralité de son service, de façon transparente au deuxième client push-to-talk, même si la session push-to-talk établie entre le premier et le deuxième client push-to-talk est rompue.

En effet, si en cours de session la communication est rompue entre les deux clients push-to-talk, par exemple à cause de l'expiration d'un délai propre au service push-to-talk, les moyens de contrôle selon l'invention prennent l'initiative de ré-établir un lien entre les deux clients push-to-talk, et ce de façon transparente pour l'utilisateur du deuxième client push-to-talk, de façon à permettre l'acheminement des données nécessaires à la complétude du service demandé.

Dans un mode préféré de réalisation, le deuxième réseau de télécommunication est un réseau de type Internet. Dans ce cas, les moyens pour établir une communication avec le fournisseur de service peuvent être constitués par une instance de client IP (Internet Protocol).

Dans ce mode de réalisation, les moyens de contrôle permettent de maintenir la session précitée en cas de rupture de la communication entre le fournisseur de service et l'instance de client IP. A cet effet, il seront adaptés à :
- détecter la rupture de cette communication ;
- initier la création d'une deuxième instance du client IP ;
- établir un troisième canal de communication entre la première ou la deuxième instance du premier client push-to-talk et la deuxième instance du client IP pour maintenir la session logique entre au moins un deuxième client push-to-talk et le fournisseur de service.

De façon préférée, le dispositif passerelle selon l'invention comporte des moyens de conversion adaptés à :
- convertir des données reçues par le premier client push-to-talk dans un format compatible avec le fournisseur de service ; et
- convertir des données reçues par les moyens de communication dans un format compatible avec la sessison push-to-talk.

Lorsque la session push-to-talk ne supporte que les messages vocaux, ces moyens de conversion comportent par exemple un moteur de reconnaissance et de synthèse vocale.

Ainsi, dans une utilisation privilégiée, la passerelle selon l'invention peut permettre d'extraire des données textuelles d'une page web reçue en provenance d'un fournisseur de service, à convertir ces données textuelles en flux vocal, et à transmettre ce flux vocal à l'utilisateur du deuxième client push-to-talk via le premier client push-to-talk.

En retour, la passerelle peut être utilisée pour convertir une réponse vocale, ou DTMF, reçue en provenance du deuxième client push-to-talk en données textuelles compatibles avec le fournisseur de service.

Dans un mode préféré de réalisation, le dispositif passerelle selon l'invention comporte des moyens pour mettre à jour, via la passerelle, un annuaire comportant une liste des services accessible à partir du deuxième client, l'annuaire comportant au moins une information suffisante pour permettre à la passerelle d'identifier l'adresse d'un fournisseur du service.

Cet annuaire, par exemple hébergé par un serveur, peut préférentiellement être accédé par un client correspondant du terminal hébergeant le deuxième client push-to-talk, par exemple un terminal mobile de type GSM.

Lorsque l'utilisateur veut accéder à un service, il se connecte à cet annuaire pour obtenir une liste des fournisseurs de ce service.

En activant un bouton prévu à cet effet (ou un lien de type URL), l'utilisateur contacte la passerelle selon l'invention qui établit une session logique avec le fournisseur de service choisi.

Dans un mode préféré de réalisation, la passerelle selon l'invention comporte des moyens pour obtenir une information de présence et/ou de disponibilité d'un deuxième client push-to-talk sur le premier réseau de télécommunication.

Cette information de présence et de disponibilité peut être avantageusement utilisée par la passerelle selon l'invention pour contacter un utilisateur présent et le mettre en relation avec un fournisseur de service prédéterminé.

L'invention vise aussi une unité de contrôle comportant des moyens pour établir un canal de communication entre :
- une instance d'un client push-to-talk adapté à établir une session push-to-talk avec un deuxième client push-to-talk sur un réseau de télécommunication ; et
- des moyens de communication avec un fournisseur de service sur un deuxième réseau de télécommunication, de manière à établir ou maintenir une session logique entre le deuxième client push-to-talk et le fournisseur de service.

Cette unité de contrôle peut constituer les moyens de contrôle du dispositif passerelle mentionné ci-dessus ou être implémentée dans un équipement indépendant.

Corrélativement, l'invention concerne un procédé de mise en communication d'au moins un deuxième client push-to-talk sur un premier réseau de télécommunication, avec un fournisseur de service sur un deuxième réseau de télécommunication, ce procédé étant susceptible d'être mis en oeuvre dans une passerelle telle que mentionnée ci-dessus. Le procédé comporte :
- une étape de création, au sein de la passerelle, d'une première instance d'un premier client push-to-talk adapté à établir une session push-to-talk avec au moins un deuxième client push-to-talk, via le premier réseau de télécommunication ;
- une étape d'établissement d'une communication entre des moyens de communication de la passerelle et le fournisseur de service sur le deuxième réseau de télécommunication ; et
- une étape d'établissement d'un premier canal de communication entre la première instance du premier client push-to-talk et les moyens de communication pour établir une session logique entre au moins un deuxième client push-to-talk et le fournisseur de service.

Selon une implémentation préférée, les différentes étapes du procédé sont déterminées par des instructions de programmes d'ordinateurs.

En conséquence, l'invention vise aussi un programme d'ordinateur sur un support d'informations, ce programme étant susceptible d'être mis en oeuvre dans un ordinateur passerelle, ce programme comportant des instructions adaptées à la mise en oeuvre du procédé de mise en communication mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur passerelle, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un dispositif passerelle conforme à l'invention dans un mode préféré de réalisation ; et
- la figure 2 représente sous forme d'organigramme les principales étapes d'un procédé de communication conforme à l'invention dans un mode préféré de réalisation.

### Description détaillée d'un mode de réalisation

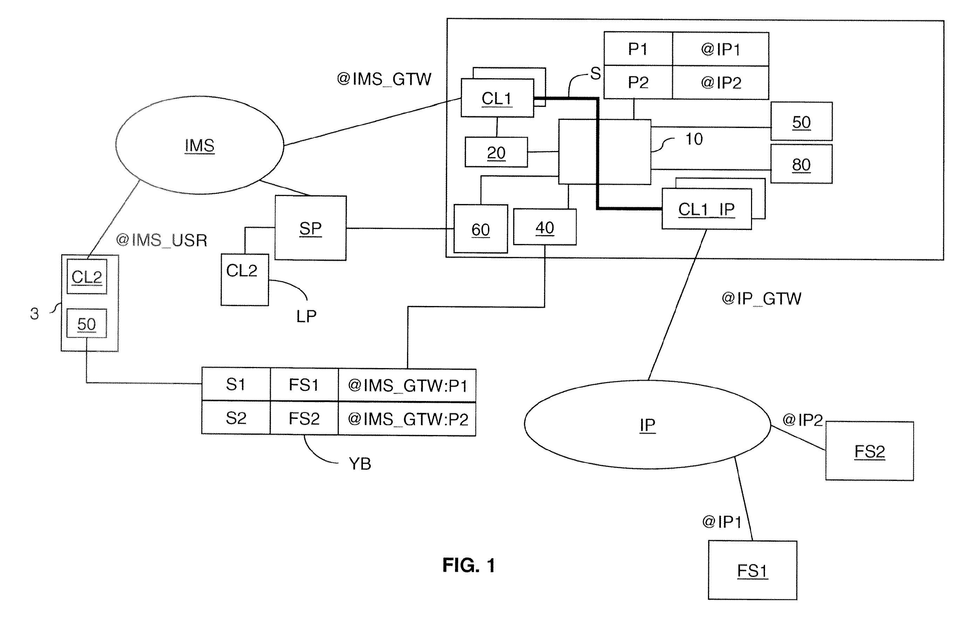

Sur la **figure 1** on a référencé 2 une passerelle conforme à l'invention.

Dans le mode de réalisation décrit ici, cette passerelle 2 est constituée par un ordinateur qui comporte des moyens 10 de traitement classiques comprenant notamment un processeur, une mémoire morte pour stocker un ou des programmes d'ordinateur et une mémoire vive pour stocker des variables temporaires nécessaires à l'exécution de ce programme.

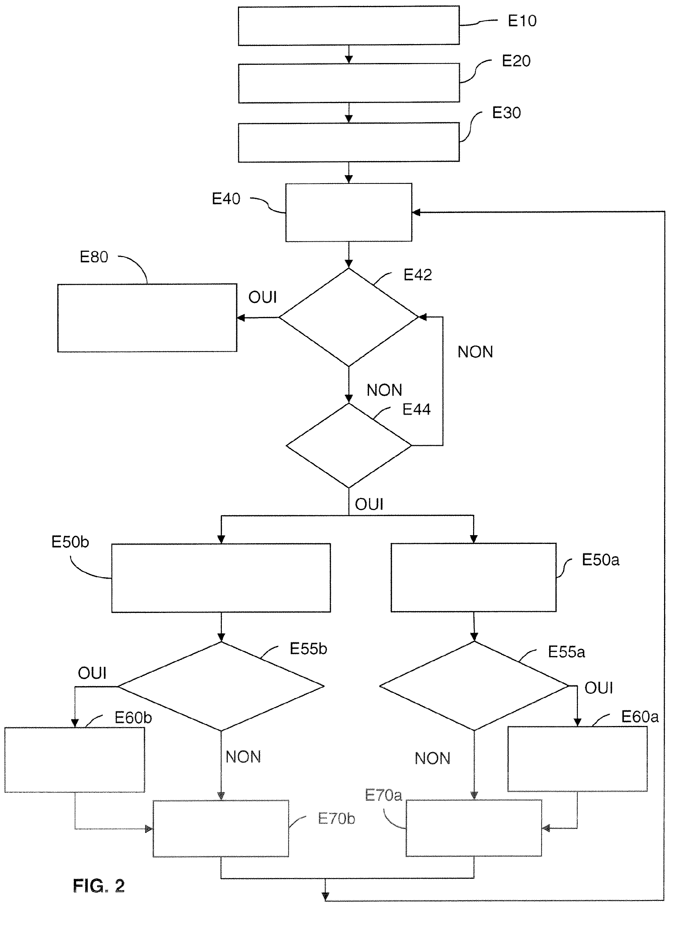

Conformément à l'invention, cette passerelle 2 mémorise dans sa mémoire morte un programme d'ordinateur comportant des instructions pour l'exécution des étapes du procédé de mise en communication selon l'invention, les principales étapes de ce procédé étant représentées sous forme d'organigramme à la **figure 2.**

La passerelle 2 permet à l'utilisateur d'un terminal 3 abonné à un service de type push-to-talk d'accéder à des services auprès de fournisseurs FS1, FS2.

Dans l'exemple décrit ici, la passerelle permet plus précisément l'acheminement de données (audio, vidéo,...) entre le sous-système multimédia IMS (IP Multimedia Subsystem) sur lequel est mis en oeuvre ce service push-to-talk et le réseau Internet noté IP.

Sur cette figure, nous avons noté :
- @IMS_USR l'adresse du terminal client 3 sur le réseau IMS ;
- @IMS_GTW l'adresse de la passerelle 2 sur le réseau IMS ;
- @IP1 et @IP2 les adresses des fournisseurs de service FS1 et FS2 sur le réseau Internet ; et
- @IP_GTW l'adresse de la passerelle 2 sur le réseau Internet.

Pour accéder au service push-to-talk, le terminal 3 de l'utilisateur possède un client push-to-talk CL2.

Nous supposerons également que le terminal 3 possède un autre client 50 qui lui permet d'accéder à un annuaire YB qui contient la liste des services accessibles via le service push-to-talk auquel il est abonné.

Dans l'exemple décrit ici, l'annuaire YB contient deux intitulés de service S1 et S2 par exemple respectivement associés à un service de météorologie (S1) et d'informations boursières (S2).

Dans la deuxième colonne de l'annuaire YB, on trouve les identités FS1 et FS2 des fournisseurs adaptés à rendre les services S1 et S2.

Dans le mode préféré de réalisation décrit ici, la passerelle 2 selon l'invention comporte des moyens 40 pour mettre l'annuaire YB à jour.

Plus précisément, les moyens 40 sont adaptés à enregistrer dans l'annuaire YB au moins une information suffisante pour permettre à la passerelle 2 d'identifier l'adresse d'un fournisseur de service lorsque cette passerelle est sollicitée par le client CL2 de l'utilisateur pour ce service.

Dans l'exemple décrit ici, nous supposerons que la passerelle 2 comporte une mémoire 70 qui associe deux ports P1, P2 de la passerelle 2 aux adresses @IP1 et @IP2 des fournisseurs de service FS1 et FS2. Dans ce mode préféré de réalisation, les moyens 40 de mise à jour de l'annuaire YB enregistrent respectivement les adresses @IMS_GTW:P1 et @IMS_GTW:P2 dans l'annuaire YB en association avec les identités des fournisseurs de service FS1 et FS2.

La passerelle 2 comporte des moyens 20 pour créer des instances d'un client push-to-talk CL1 adapté à établir une session push-to-talk avec le client push-to-talk CL2 du terminal 3.

Ce client CL1 supporte les protocoles push-to-talk utilisés sur le réseau IMS. Il prend en charge la gestion des sessions push-to-talk ainsi que tous les échanges push-to-talk (voix, autres médias, et signalisation).

L'homme du métier comprendra qu'une instance du client push-to-talk CL1 peut prendre en charge une ou plusieurs sessions avec un même utilisateur en fonction du service, lorsque le service push-to-talk accepte les sessions multiples.

La passerelle 2 comporte également des moyens pour établir une communication avec les fournisseurs de service FS1, FS2 sur le réseau de télécommunication Internet IP.

Dans l'exemple décrit ici, ces moyens de communication sont constitués par une instance de client IP connue en soi par l'homme du métier.

Nous allons maintenant décrire un scénario dans lequel l'utilisateur du terminal 3 désire accéder à un service de météorologie.

A cet effet, il recherche, à l'aide de son client 50, un fournisseur de service météorologie enregistré dans l'annuaire YB.

Dans l'exemple décrit ici, ce client 50 obtient l'identité FS1 du serveur du même nom. L'utilisateur du terminal 3 appuie alors sur un bouton de son terminal pour accéder au service de météorologie auprès de FS1.

En pratique, le client push-to-talk CL2 du terminal 3 initie une session push-to-talk sur le réseau IMS avec une instance du client push-to-talk CL1 dont l'adresse sur le réseau IMS, obtenue à partir de l'annuaire YB, est @IMS_GTW:P1.

Les moyens de traitement 10 de la passerelle 2 sont adaptés à obtenir le port P1 à partir des informations de la session push-to-talk établie entre le client CL2 du terminal 3 et le client CL1 de la passerelle 2.

Les moyens de traitement 10 sont ensuite adaptés à lire dans la base de données 70 l'adresse Internet @IP1 associée au port P1. Cette adresse constitue l'adresse du fournisseur de service FS1 qui doit être contacté pour rendre le service de météorologie à l'utilisateur du terminal 3.

A cet effet, les moyens de traitement 10 comportent des moyens de contrôle adaptés à créer une instance d'un client IP CL1_IP pour communiquer via le réseau Internet IP avec le fournisseur de service FS1 à l'adresse @IP1.

Dans l'exemple préféré décrit ici, la passerelle 2 selon l'invention comporte également une base de données 80 dans laquelle sont mémorisés les médias supportés par les fournisseurs de service FS1 et FS2.

Dans cet exemple, nous supposerons que le fournisseur de service FS1 est adapté à délivrer les informations de météorologie sous forme de page HTML et à recevoir des requêtes HTTP.

Nous supposerons également que la session push-to-talk établie entre le client CL2 du terminal 3 et l'instance CL1 du client push-to-talk de la passerelle est une session qui ne supporte que les flux audio.

Dans le mode préféré de réalisation décrit ici, la passerelle 2 selon l'invention comporte des moyens 150 adaptés :
- à convertir les données audio reçues par son client push-to-talk CL1 en requêtes HTTP compatibles avec le fournisseur de service FS1 ; et
- à convertir les pages HTML reçues par son client IP CL1_IP en données audio compatibles avec le client CL2 du terminal 3.

Ainsi, par exemple lorsque le client CL1_IP obtient la première page HTML du fournisseur de service FS1, cette page comportant par exemple des noms de villes pour lesquelles le fournisseur détient des données météorologiques, les moyens de conversion 150 sont adaptés à convertir ces noms de villes en flux audio et à envoyer ce flux audio au client push-to-talk CL2 du terminal 3 via le client push-to-talk CL1 de la passerelle 2.

Inversement, les moyens de conversion 150 sont adaptés, dans cet exemple, à transcrire en texte un flux vocal reçu du terminal 3, ce flux vocal étant par exemple ici constitué par un message audio représentatif du nom d'une ville pour laquelle l'utilisateur souhaite obtenir des données météorologiques.

Nous allons maintenant décrire en détail, en référence à la **figure 2,** un exemple de mise en oeuvre des moyens de contrôle 10 du dispositif passerelle 2 conforme à l'invention.

Dans l'exemple décrit ici, ces moyens de contrôle sont mis en oeuvre par les moyens de traitement 10 et sont également référencés 10.

Sur réception d'un appel du client push-to-talk CL2 du terminal 3, les moyens de contrôle 10 sont adaptés, au cours d'une étape E10, à créer une première instance d'un client push-to-talk CL1 pour établir une session push-to-talk avec ce client CL2.

Puis, après avoir obtenu l'adresse IP du fournisseur de service FS1, les moyens de contrôle 10 sont adaptés, au cours d'une étape E20, à créer une instance d'un client IP CL1_IP pour communiquer via le réseau Internet avec ce fournisseur de service FS1.

Puis, les moyens de contrôle 10 selon l'invention sont adaptés à établir, au cours d'une étape E30, un canal de communication S entre l'instance du client push-to-talk CL1 et l'instance du client IP CL1_IP afin d'établir une session logique entre le client CL2 du terminal 3 et le fournisseur de service FS1.

L'homme du métier comprendra que ce canal de communication S permet d'acheminer des données, converties si nécessaire par les moyens de conversion 150.

Dans le mode préféré de réalisation décrit ici, on supposera que les moyens de contrôle 10 de la passerelle 2 terminent cette session logique lorsque aucune trame n'est échangée entre le client push-to-talk CL2 et le fournisseur de service FS1 pendant une durée prédéterminée TIMER.

A cet effet, l'étape E30 d'établissement du canal de communication S est suivie par une étape E40 d'initialisation d'un compte à rebours avec cette durée TIMER.

Cette étape d'initialisation est suivie par une étape E42 au cours de laquelle les moyens de contrôle 10 vérifient si ce compte à rebours à expiré.

Si tel est le cas, le test E42 est suivi par une étape E80 au cours de laquelle les moyens de contrôle 10 de la passerelle 2 selon l'invention détruisent les instances du client push-to-talk CL1 et du client IP CL1_IP.

Tant que le compte à rebours n'a pas encore expiré, le résultat du test E42 est négatif.

Ce test est alors suivi par un test E44 au cours duquel les moyens de contrôle 10 vérifient si une trame a été reçue en provenance du client push-to-talk CL2 ou du fournisseur de service FS1.

Lorsque tel n'est pas le cas, le résultat de ce test E44 est négatif. Ce test est alors suivi par le test E42 déjà décrit de vérification de l'expiration ou non du compte à rebours.

Lorsqu'une trame a été reçue en provenance du client push-to-talk CL2, c'est-à-dire par le client push-to-talk CL1 de la passerelle 2, le test E44 est suivi par une étape E50a, au cours de laquelle le flux audio reçu par le client push-to-talk CL1 est converti en données textuelles adaptées au fournisseur de service FS1.

Cette étape de conversion E50a est suivie par une étape E55a au cours de laquelle les moyens de contrôle 10 effectuent un test pour détecter si la communication établie entre le client IP CL1_IP et le fournisseur de service FS1 a été rompue, par exemple à cause d'un délai propre au protocole HTTP établi avec le fournisseur de service FS1.

Si tel est le cas, ce test E55a est suivi par une étape E60a au cours de laquelle les moyens de contrôle 10 initient la création d'une deuxième instance du client IP CL1_IP, et établissent un canal de communication entre le client push-to-talk toujours actif CL1 et cette nouvelle instance du client IP CL1_IP.

Ces moyens de contrôle 10 permettent ainsi avantageusement de maintenir la session entre le client CL2 du terminal 3 et le fournisseur de service FS1, même si la session IP est rompue.

Les données converties en format textuel à l'étape E50a sont ensuite transférées, au cours d'une étape E70a, au fournisseur de service FS1.

Cette étape de transfert de données est suivie par l'étape E40 déjà décrite au cours de laquelle les moyens de contrôle 10 ré-initialisent le compte à rebours avec la valeur TIMER.

La passerelle 2 selon l'invention est adaptée à mettre en oeuvre le processus équivalent lorsqu'une trame est reçue à l'étape E44 en provenance du fournisseur de service FS1, à savoir par le client IP CL1_IP.

Plus précisément, les moyens de contrôle 10 commandent (étape E50b) les moyens de conversion 150 pour convertir la page HTML en flux audio pouvant être transporté par la session push-to-talk établie entre le client CL1 de la passerelle 2 et le client CL2 du terminal 3.

Cette étape de conversion E50b est suivie par un test E55b au cours duquel les moyens de contrôle 10 de la passerelle 2 vérifient si la session push-to-talk est toujours établie.

Ceci peut être le cas notamment lorsqu'un délai propre au service push-to-talk a expiré.

Lorsque tel est le cas, les moyens de contrôle 10 initient la création (étape E60b) d'une deuxième instance du client push-to-talk CL1 et établissent un canal de communication S entre cette deuxième instance CL1 et l'instance CL1_IP du client IP toujours active.

Cette étape E60b de création d'une nouvelle instance du client push-to-talk est suivie par une étape E70b au cours de laquelle le flux audio obtenu à l'étape E50b est envoyé au client push-to-talk CL2 du terminal 3.

Cette étape E70b d'acheminement du flux est suivie par l'étape E40 déjà décrite de ré-initialisation du compte à rebours avec la valeur TIMER.

Dans l'exemple décrit ici, nous avons détaillé un scénario dans lequel le client CL2 initie la session par un accès au fournisseur de service FS1.

L'homme du métier comprendra que la passerelle 2 selon l'invention peut également être utilisée dans un mode dans lequel un fournisseur de service FS1, FS2 contacte spontanément un utilisateur du service push-to-talk.

A cet effet, la passerelle 2 selon l'invention comporte préférentiellement des moyens 60 pour déterminer si un client push-to-talk CL2 est disponible ou non sur le réseau de télécommunication IMS.

Dans le mode préféré de réalisation décrit ici, ces moyens 60 sont constitués par un client de présence adapté à contacter un serveur de présence SP relié au réseau IMS.

Ce serveur de présence SP est connu en soi. Il comporte une liste de présence LP comportant l'ensemble des identifiants des clients push-to-talk CL2 connectés au réseau IMS à un instant donné.

Dans un mode préféré de réalisation, ces moyens 60 sont également adaptés à envoyer au serveur de présence SP des informations représentatives de la présence et/ou de la disponibilité des services S1, S2 offerts par les fournisseurs de service FS1, FS2.

Ainsi, l'homme du métier comprendra que les moyens 60 sont adaptés :
- à informer les fournisseurs de service FS1, FS2 de la présence des clients push-to-talk, les fournisseurs de service pouvant ainsi offrir certains services à ses utilisateurs ; et
- à informer les clients push-to-talk de la présence de certains services, les utilisateurs pouvant ainsi spontanément contacter les fournisseurs donnant accès à ces services.

Dans ce mode de réalisation, le client IP du fournisseur de service, par exemple FS1, établit une communication avec une instance du client IP CL1_IP de la passerelle 2. Dans le mode préféré de réalisation décrit ici, dans lequel le deuxième réseau R2 est le réseau Internet, cette communication est initiée par l'envoi d'une requête HTTP à l'adresse @IP_GTW de la passerelle 2, cette requête comportant l'adresse @IMS_USR, sur le réseau IMS, du terminal 3 que souhaite contacter le fournisseur de service.

Sur réception de cette requête, les moyens de contrôle 10 de la passerelle 2 créent une instance du premier client push-to-talk CL1 de manière à établir une session push-to-talk, sur le réseau IMS, avec le client push-to-talk CL2 du terminal 3.

Les moyens de contrôle 10 de la passerelle 2 établissent ensuite un canal de communication entre l'instance du client push-to-talk CL1 et l'instance du client IP CL1_IP de manière à établir une session logique entre le fournisseur de service FS1 et le client push-to-talk CL2.

## Revendications

1. Dispositif passerelle comportant :
- des moyens (20) pour créer une première instance d'un premier client push-to-talk (CL1) adapté à établir une session push-to-talk avec au moins un deuxième client push-to-talk (CL2), via un premier réseau de télécommunication (R1) ;
- des moyens pour créer une instance d'un client IP (CL_1IP) pour établir une communication avec un fournisseur de service (FS1, FS2) sur un deuxième réseau de télécommunication (R2) de type Internet ; et
- des moyens de contrôle (10) adaptés à établir un premier canal de communication (S) entre ladite première instance du premier client push-to-talk (CL1) et lesdits moyens (CL1_IP) de communication pour établir et maintenir une session logique entre ledit au moins un deuxième client push-to-talk (CL2) et ledit fournisseur de service (FS1, FS2).

2. Dispositif passerelle selon la revendication 1, **caractérisé en ce que** lesdits moyens de contrôle (10) sont adaptés à :
- détecter la rupture de ladite session push-to-talk ;
- initier la création d'une deuxième instance dudit premier client push-to-talk (CL1);
- établir une deuxième session push-to-talk entre ladite deuxième instance dudit premier client push-to-talk (CL1) et ledit au moins un deuxième client push-to-talk (CL2) ; et
- établir un deuxième canal de communication (S) entre ladite deuxième instance du premier client push-to-talk (CL1) et lesdits moyens (CL1_IP) de communication pour maintenir ladite session logique entre ledit au moins un deuxième client push-to-talk (CL2) et ledit fournisseur de service (FS1, FS2).

3. Dispositif passerelle selon la revendication 1 ou 2, **caractérisé en ce que** lesdits moyens de contrôle (10) sont adaptés à :
- détecter la rupture de la communication entre ledit fournisseur de service (FS1, FS2) et ladite instance de client IP (CL1_IP) ;
- initier la création d'au moins une deuxième instance dudit client IP (CL1_IP) ;
- établir un troisième canal de communication (S) entre ladite première ou ladite au moins une deuxième instance du premier client push-to-talk (CL1) et ladite deuxième instance de client IP (CL1_IP) pour maintenir ladite session logique entre ledit au moins un deuxième client push-to-talk (CL2) et ledit fournisseur de service (FS1, FS2).

4. Dispositif passerelle selon l'une quelconque des revendications 1 à 3, **caractérisé en ce qu'**il comporte des moyens (150) de conversion adaptés à :
- convertir des données reçues par le premier client push-to-talk (CL1) dans un format compatible avec ledit fournisseur de service (FS1, FS2) ; et
- convertir des données reçues par les moyens de communication (CL1_IP) dans un format compatible avec ladite session push-to-talk (CL2).

5. Dispositif passerelle selon l'une quelconque des revendications 1 à 4, **caractérisé en ce qu'**il comporte des moyens (40) pour mettre à jour un annuaire (YB) comportant une liste des services (S1, S2) accessibles à partir dudit deuxième client push-to-talk (CL2) via ladite passerelle (2), ledit annuaire (YB) comportant au moins une information (P1, P2) suffisante pour permettre à ladite passerelle (2) d'identifier l'adresse (@IP1, @IP2) d'un fournisseur (FS1, FS2) dudit service (S1, S2).

6. Dispositif passerelle selon l'une quelconque des revendications 1 à 5, **caractérisé en ce qu'**il comporte des moyens (60) pour obtenir une information de présence et/ou de disponibilité d'un deuxième client push-to-talk (CL2) sur ledit premier réseau de télécommunication (R1).

7. Dispositif passerelle selon l'une quelconque des revendications 1 à 6, **caractérisé en ce qu'**il comporte des moyens (60) pour publier la présence et/ou la disponibilité des services offerts par lesdits fournisseurs de service (FS1, FS2).

8. Unité de contrôle comportant des moyens pour établir un canal de communication (S) entre :
- une instance d'un client push-to-talk (CL1) adapté à établir une session push-to-talk avec un deuxième client push-to-talk (CL2) sur un premier réseau de télécommunication (R1) ; et
- une instance d'un client IP (CL1_IP) en communication avec un fournisseur de service (FS1, FS2) sur un deuxième réseau de télécommunication (R2) de type Internet, de manière à établir et maintenir une session logique entre le deuxième client push-to-talk (CL2) et le fournisseur de service (FS1, FS2).

9. Procédé de mise en communication d'au moins un deuxième client push-to-talk (CL2) sur un premier réseau de télécommunication (R1), avec un fournisseur de service (FS1, FS2) sur un deuxième réseau de télécommunication (R2) de type Internet, ledit procédé étant susceptible d'être mis en oeuvre dans une passerelle selon l'une quelconque des revendications 1 à 7, le procédé comportant :
- une étape (E10) de création, au sein de ladite passerelle (2), d' une première instance d'un premier client push-to-talk (CL1) adapté à établir une session push-to-talk avec ledit au moins un deuxième client push-to-talk (CL2_PTT), via ledit premier réseau de télécommunication (R1) ;
- une étape (E20) d'établissement d'une communication entre une instance d'un client IP (CL1_IP) de ladite passerelle (2) et ledit fournisseur de service (FS1, FS2) sur ledit deuxième réseau de télécommunications (R2) ; et
- une étape (E30) d'établissement d'un premier canal de communication (S) entre ladite première instance du premier client push-to-talk (CL1) et lesdits moyens (CL1_IP) de communication pour établir et maintenir une session logique entre ledit au moins un deuxième client push-to-talk (CL2) et ledit fournisseur de service (FS1, FS2).

10. Programme d'ordinateur comportant des instructions pour l'exécution des étapes du procédé de mise en communication selon la revendication 9 lorsque ledit programme est exécuté par un ordinateur.

11. Support d'enregistrement lisible par un ordinateur sur lequel est enregistré un programme d'ordinateur comprenant des instructions pour l'exécution des étapes du procédé de mise en communication selon la revendication 9 lorsque ledit programme est exécuté par un ordinateur.
